# EUROPÄISCHE PATENTSCHRIFT

(11) **EP 2 982 580 B1**
(45) Veröffentlichungstag und Bekanntmachung des Hinweises auf die Patenterteilung: **01.08.2018**
(21) Anmeldenummer: 14179899.1
(22) Anmeldetag: 05.08.2014
(51) Int. Cl.: B62D 27/02, B62D 65/04, F16B 5/02, B29C 65/48, B29C 65/56, B62D 25/02, F16B 11/00, B29C 65/72

(54) **Verfahren zur Herstellung eines Kraftfahrzeuges und Kraftfahrzeug**
Method for controlling a motor vehicle and motor vehicle
Procédé de fabrication d'un véhicule automobile et véhicule automobile

(43) Veröffentlichungstag der Anmeldung: 10.02.2016
(73) Patentinhaber: MAGNA STEYR Fahrzeugtechnik AG & Co KG, 8041 Graz (AT)
(72) Erfinder: Hofer, Bernhard, 8053 Graz (AT); Zachnegger, Harald, 8041 Graz (AT)
(74) Vertreter: Zangger, Bernd

(56) Entgegenhaltungen:
- EP-A1- 1 832 759
- EP-A2- 1 304 489
- EP-A2- 1 744 063
- EP-A2- 1 764 516
- DE-A1-102006 033 751
- DE-A1-102012 007 318
- DE-A1-102012 217 960
- DE-U1-202008 011 318

## Beschreibung

### Gebiet der Erfindung

Die vorliegende Erfindung betrifft ein Verfahren zur Herstellung eines Kraftfahrzeuges und ein entsprechend hergestelltes Kraftfahrzeug. Insbesondere betrifft die Erfindung Kraftfahrzeuge die in Modulbauweise hergestellt werden, wobei unabhängig voneinander ein Unterbau und weitere Aufbaumodule des Kraftfahrzeuges hergestellt werden, die anschließend miteinander dauerhaft verbunden werden.

### Stand der Technik

Derartige Verfahren zur Herstellung von Kraftfahrzeugen mittels Modulen sind an sich bekannt. Die EP 2 463 181 A2 beschreibt ein Verfahren zur Herstellung eines Kraftfahrzeuges in welchem vormontierte Module in einer Montagelinie zu einem Gesamtfahrzeug gefügt werden. Die Module werden vor dem Fügen lackiert, der Zusammenbau erfolgt durch Ankleben und/oder Anschrauben der Module.

Das Kleben eines Aufbaumoduls an einen Unterbau ist jedoch in mehrfacher Hinsicht schwierig, da hohe Anforderungen an die Steifigkeit und Festigkeit der Verbindung bestehen und daher üblicherweise eine langwierige Aushärtung des Klebstoffes erforderlich ist, die die Produktionszyklen verlangsamt und zusätzlich für eine stabile Verklebung die Bauteiltoleranzen ausgesprochen gering sein müssen um ein genaues Anliegen der Klebeflächen zu erreichen, wodurch die Produktion zusätzlich erschwert wird. Die DE102012007318 zeigt ein Verfahren zum Verbinden von Bauteilen mittels einer Klebeschicht und unter anschließender Verwendung einer toleranzausgleichenden Schraubverbindung zum Aushärten der anschließenden Lackierung.

### Zusammenfassung der Erfindung

Es ist eine Aufgabe der Erfindung, ein Verfahren zur Herstellung eines Kraftfahrzeuges anzugeben, das eine hohe Fahrzeugsteifigkeit und hohe Strukturfestigkeit im Crashfall ermöglicht und dabei rasche Produktionszyklen ermöglicht. Eine weitere Aufgabe ist es ein Kraftfahrzeug mit erhöhter Strukturfestigkeit anzugeben.

Die Lösung der Aufgabe erfolgt durch ein Verfahren zur Herstellung eines Kraftfahrzeuges umfassend die Schritte:
- Erzeugen eines Unterbaues und zumindest eines Aufbaumoduls des Kraftfahrzeuges, wobei der Unterbau und das Aufbaumodul jeweils zumindest einen Randbereich aufweisen,
- Lackieren zumindest des Randbereichs des Unterbaus und/oder des Aufbaumoduls,
- Verbinden der Randbereiche von Unterbau und Aufbaumodul mittels Klebstoff, wobei der Unterbau und das Aufbaumodul mittels einer toleranzausgleichenden Schraubverbindung relativ zueinander positioniert werden, so dass die Randbereiche von Unterbau und Aufbaumodul während der Aushärtung des Klebstoffs mittels der toleranzausgleichenden Schraubverbindung in ihrer relativen Lage fixiert sind.

Unterbau und Aufbaumodul können erfindungsgemäß unabhängig voneinander hergestellt werden und werden bereits vor dem Verbinden lackiert, insbesondere tauchlackiert. Zumindest wird dabei einer der Randbereiche oder beide Randbereiche lackiert, üblicherweise werden die gesamten Bauteile lackiert.

Bei dem hier in der Schrift verwendeten Begriff des Unterbaues kann es sich, ähnlich dem Aufbaumodul, ebenfalls um ein Modul bzw. Unterbaumodul handeln, das als fix und fertiger Zusammenbau einer Struktureinheit verstanden werden kann. Ausstattungskomponenten können darin bereits aufgenommen sein. Oftmals wird es sich bei dem Unterbau um ein im Aufbaugrad dem Aufbaumodul gleichwertiges Modul handeln, zum Beispiel können beide, wie oben erwähnt, bereits lackiert sein.

Durch die Verwendung einer toleranzausgleichenden Schraubverbindung ist es möglich die beiden Bauteile Unterbau und Aufbaumodul auch bei Bestehen eines Spalts zwischen den Bauteilen zueinander in Position zu halten und in dieser Position zu fixieren. Dadurch ist zusätzlich zur Verbindungswirkung der Schraubverbindung auch die weitere Bearbeitung des Verbunds aus Unterbau und Aufbaumodul möglich, auch wenn der Klebstoff noch nicht ausgehärtet ist, da durch die fixe Positionierung Vernetzungsfehler der Klebeverbindung verhindert werden. Eine Deformation von Unterbau und Aufbaumodul wird durch die toleranzausgleichende Schraubverbindung verhindert, auch wenn ein Spalt zwischen den Modulen besteht, ebenso wie Beschädigungen der Oberflächen der Bauteile, insbesondere deren Lackschichten.

Weiterbildungen der Erfindung sind in den abhängigen Ansprüchen, der Beschreibung sowie den beigefügten Zeichnungen angegeben.

Bevorzugt wird durch die toleranzausgleichende Schraubverbindung ein Abstand zwischen dem Unterbau und dem Aufbaumodul überbrückt. Die Bauteile Unterbau und Aufbaumodul können daher mit größeren Toleranzen gefertigt werden.

Bevorzugt ist die toleranzausgleichende Schraubverbindung ein automatisches Toleranzausgleichssystem, dass sich selbst an einen bestehenden Abstand zwischen Unterbau und Aufbaumodul einstellen kann. Derartige Schraubverbindungen sind insbesondere unter der Bezeichnung FLEXITOL ® von der Firma Wilhelm Böllhoff GmbH & Co KG erhältlich.

Die toleranzausgleichende Schraubverbindung kann eine Hülse mit einem ersten Innengewinde umfassen, die in den Unterbau oder das Aufbaumodul eingesetzt wird, und ein Verstellelement mit einem Innengewinde und einem Außengewinde umfassen, dass in das Innengwinde der Hülse eingeschraubt wird, und eine Schraube mit einem Außengewinde umfassen, die durch eine Öffnung des anderen der beiden Bauteile, nämlich Aufbaumodul oder Unterbau, in das Innengewinde des Verstellelements eingeschraubt wird.

Bevorzugt weist der Unterbau oder das Aufbaumodul im Randbereich eine Zunge auf und das andere der beiden Bauteile weist im Randbereich eine Nut auf. Zum Verbinden der Randbereiche von Unterbau und Aufbaumodul wird Klebstoff als Klebebad in die Nut eingebracht und die Zunge wird in das Klebebad eingebracht. Bei einer derartigen Verbindung muss durch die toleranzausgleichende Schraubverbindung kein Kontakt zwischen Zunge und Nut bestehen. Auch wenn es zu einem Kontakt zwischen Zunge und Nut kommt besteht kein Korrosionsrisiko, da dieser Bereich von Klebstoff umgeben und damit abgedichtet ist.

Alternativ oder zusätzlich können auch Klebeverbindungen genutzt werden die parallele Klebeflächen, insbesondere parallele Flanschflächen der Bauteile zur Verklebung nutzen.

Bevorzugt weist die Zunge Löcher auf, so dass Klebstoff durch die Löcher hindurchtreten kann um zusätzlich zur stoffschlüssigen Verbindung eine formschlüssige Verbindung zu erreichen und somit die Festigkeit der Verbindung zu erhöhen.

Der Unterbau und das Aufbaumodul können in einer Ausführungsform der Erfindung zusätzlich zur Klebeverbindung und zur Verbindung mittels toleranzausgleichender Schraubverbindung auch vernietet werden.

Die toleranzausgleichende Schraubverbindung verbleibt bevorzugt nach der Herstellung des Fahrzeuges im Kraftfahrzeug um nicht nur den Herstellungsprozess zu vereinfachen sondern auch im fertigen Fahrzeug die Festigkeit und Steifigkeit zu erhöhen.

Ein erfindungsgemäßes Kraftfahrzeug umfasst einen Unterbau und zumindest ein Aufbaumodul des Kraftfahrzeuges, wobei der Unterbau und das Aufbaumodul jeweils zumindest einen Randbereich aufweisen, wobei zumindest der Randbereich des Unterbaus und/oder des Aufbaumoduls mittels Klebstoff verbunden sind, wobei der Unterbau und das Aufbaumodul mittels einer toleranzausgleichenden Schraubverbindung relativ zueinander positioniert sind, so dass die Randbereiche von Unterbau und Aufbaumodul mittels der toleranzausgleichenden Schraubverbindung in ihrer relativen Lage fixiert sind.

Das erfindungsgemäße Kraftfahrzeug kann selbstverständlich alle für das Herstellungsverfahren genannten Merkmale aufweisen.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines Schwellers eines erfindungsgemäßen Kraftfahrzeuges und ein Ergebnis eines erfindungsgemäßen Verfahrens.
- Fig. 2: ist eine Schnittansicht in einer anderen Schnittebene eines Schwellers gemäß Fig. 1.
- Fig. 3: ist eine Schnittansicht eines Schwellers gemäß Fig. 1 in einer alternativen Ausführungsform.
- Fig. 4: ist eine Detaildarstellung einer Ausführungsform einer Klebeverbindung, die in einem erfindungsgemäßen Verfahren verwendet werden kann.

### Detaillierte Beschreibung der Erfindung

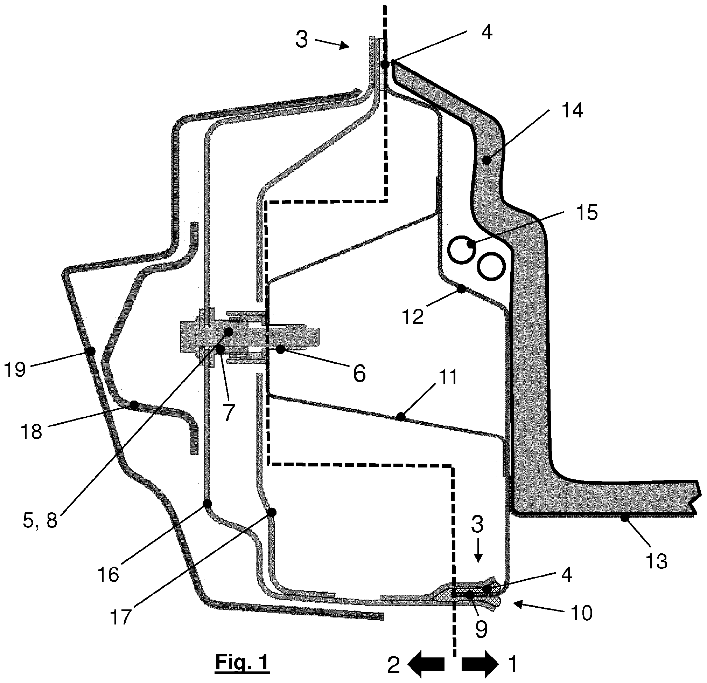

Fig. 1 ist eine Schnittansicht eines Schwellers eines erfindungsgemäßen Kraftfahrzeuges und ein Ergebnis eines erfindungsgemäßen Verfahrens.

Rechts der strichlierten Linie ist ein Unterbau 1 dargestellt, der einen ersten Bodenteil 11, zweiten Bodenteil 12 und dritten Bodenteil 13 umfasst, wobei am dritten Bodenteil 13 ein Teppich 14 montiert ist. Zwischen zweitem und drittem Bodenteil 12, 13 sind Elektrikleitungen 15 unterhalb des Teppichs 14 verlegt.

Links der strichlierten Linie ist ein Aufbaumodul 2 dargestellt, mit einem ersten Seitenwandteil 16 und einem zweiten Seitenwandteil 17, sowie mit einem ersten Schwellerverkleidungsteil 18 und einem zweiten Schwellerverkleidungsteil 19.

Der erste Bodenteil 11 und der erste Seitenwandteil 16 sind mittels einer toleranzausgleichenden Schraubverbindung 5 miteinander dauerhaft verbunden. Die toleranzausgleichende Schraubverbindung 5 tritt durch eine Öffnung des zweiten Seitenwandteils 17 und überbrückt einen Abstand zwischen erstem Bodenteil 11 und erstem Seitenwandteil 16.

Die toleranzausgleichende Schraubverbindung 5 umfasst eine Hülse 6 mit einem ersten Innengewinde, wobei die Hülse 6 in eine Öffnung des ersten Seitenwandteils 16 des Unterbaus 1 eingesetzt ist, ein Verstellelement 7 mit einem Innengewinde und einem Außengewinde, dass in das Innengwinde der Hülse eingeschraubt ist bzw. die mittels eines Käfigs an der Hülse 6 befestigt ist, und eine Schraube 8 mit einem Außengewinde, die durch eine Öffnung des ersten Seitenwandteils 16 des Aufbaumoduls 2 in das Innengewinde des Verstellelements 7 und der Hülse 6 eingeschraubt ist.

Der Unterbau 1 - nämlich das zweite Bodenteil 12 - und das Aufbaumodul 2 - nämlich das erste Seitenwandteil 16 und das zweite Seitenwandteil 17 - weisen zwei Randbereiche 3 auf, die, nicht dargestellt, bereits tauchlackiert sind und mittels Klebstoff 4 verbunden sind. Im in der Fig. 1 oben dargestellten Randbereich 3 sind parallele Klebeflächen der Randbereiche 3 miteinander verklebt, im unten dargestellten Randbereich 3 bildet das erste Seitenwandteil 16 eine mit Klebstoff 4 gefüllte Nut 10 und somit ein Kleberbad aus, in das eine Zunge 9, nämlich der Rand des zweiten Bodenteils 12 eintaucht um derart klebeverbunden zu werden.

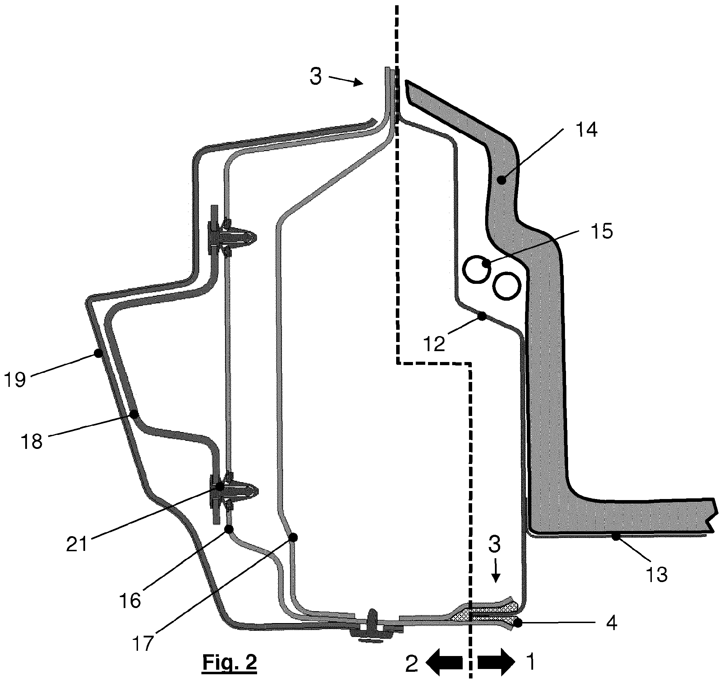

Fig. 2 ist eine Schnittansicht in einer anderen Schnittebene eines Schwellers gemäß Fig. 1 und zeigt, dass in dieser anderen Schnittebene, in der keine toleranzausgleichende Schraubverbindung 5 vorliegt, das erste Seitenwandteil 16 und das erste Schwellerverkleidungsteil 18, das der Abdeckung von toleranzausgleichenden Schraubverbindungen dient, mittels Verbindungselementen 21 miteinander verbunden sind. Gemeinsam mit dem Schwellerverkleidungsteil 19 und dem zweiten Seitenwandteil 17 bilden sie einen Zusammenbau bzw. ein Aufbaumodul 2.

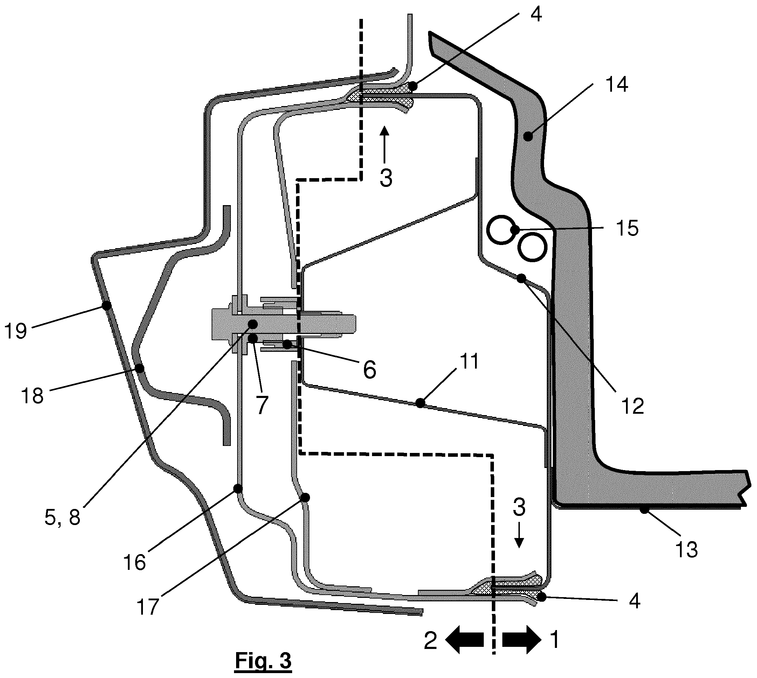

Fig. 3 zeigt eine alternative Ausführungsform eines Schwellers oder eine andere Schnittebene des selben Schwellers der Fig. 1 und Fig. 2, wobei in beiden Randbereichen 3 ein Kleberbad verwendet wird, wobei jeweils das Aufbaumodul 2 eine Nut für das Kleberbad bildet und der Unterbau 1 eine Zunge ausbildet, die in das Kleberbad eintaucht.

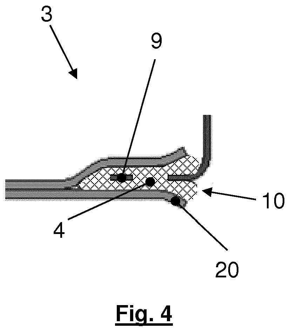

Wie in der Detaildarstellung der Fig. 4 dargestellt, kann eine in ein Klebebad eintauchende Zunge 9, ebenso wie ein parallel verklebter Randbereich 3, ein oder mehrere Öffnungen aufweisen und somit als gelochter Flansch ausgebildet sein, sodass Klebstoff 4 durch die Öffnungen hindurchtreten kann um die Verbindung weiter zu festigen. Die eine Nut 10 bildenden Ränder des Aufbaumoduls weisen Anlaufschrägen 20 auf, als Einführhilfe zum sicheren Fügen und zum Auffangen eines Kleberaustritts.

### Bezugszeichenliste

- 1: Unterbau
- 2: Aufbaumodul
- 3: Randbereich
- 4: Klebstoff
- 5: toleranzausgleichende Schraubverbindung
- 6: Hülse
- 7: Verstellelement
- 8: Schraube
- 9: Zunge
- 10: Nut
- 11: erster Bodenteil
- 12: zweiter Bodenteil
- 13: dritter Bodenteil
- 14: Teppich
- 15: Elektrikleitungen
- 16: erster Seitenwandteil
- 17: zweiter Seitenwandteil
- 18: erster Schwellerverkleidungsteil
- 19: zweiter Schwellerverkleidungsteil
- 20: Anlaufschräge
- 21: Verbindungselement

## Patentansprüche

1. Verfahren zur Herstellung eines Kraftfahrzeuges umfassend die Schritte:
- Erzeugen eines Unterbaues (1) und zumindest eines Aufbaumoduls (2) des Kraftfahrzeuges, wobei der Unterbau (1) und das Aufbaumodul (2) jeweils zumindest einen Randbereich (3) aufweisen,
- Lackieren zumindest des Randbereichs (3) des Unterbaus (1) und/oder des Aufbaumoduls (2),
- Verbinden der Randbereiche (3) von Unterbau (1) und Aufbaumodul (2) mittels Klebstoff (4), wobei der Unterbau (1) und das Aufbaumodul mittels einer toleranzausgleichenden Schraubverbindung (5) relativ zueinander positioniert werden, so dass die Randbereiche (3) von Unterbau (1) und Aufbaumodul (2) während der Aushärtung des Klebstoffs (4) mittels der toleranzausgleichenden Schraubverbindung (5) in ihrer relativen Lage fixiert sind.

2. Verfahren nach Anspruch 1,
**dadurch gekennzeichnet, dass** die toleranzausgleichende Schraubverbindung (5) einen Abstand zwischen dem Unterbau (1) und dem Aufbaumodul (2) überbrückt.

3. Verfahren nach Anspruch 1,
**dadurch gekennzeichnet, dass** die toleranzausgleichende Schraubverbindung (5) ein automatisches Toleranzausgleichssystem ist, insbesondere ein FLEXITOL ® Element.

4. Verfahren nach Anspruch 1,
**dadurch gekennzeichnet, dass** die toleranzausgleichende Schraubverbindung (5) eine Hülse (6) mit einem ersten Innengewinde umfasst, die in den Unterbau (1) oder das Aufbaumodul (2) eingesetzt wird, ein Verstellelement (7) mit einem Innengewinde und einem Außengewinde umfasst, dass in das Innengwinde der Hülse eingeschraubt wird, und eine Schraube (8) mit einem Außengewinde umfasst, die durch das Aufbaumodul (2) oder den Unterbau (1) in das Innengewinde des Verstellelements (7) und der Hülse (6) eingeschraubt wird.

5. Verfahren nach zumindest einem der vorhergehenden Ansprüche, **dadurch gekennzeichnet, dass** der Unterbau (1) oder das Aufbaumodul (2) im Randbereich (3) eine Zunge (9) aufweist und das Aufbaumodul (2) oder der Unterbau (1) im Randbereich (3) eine Nut (10) aufweist und zum Verbinden der Randbereiche (3) von Unterbau (1) und Aufbaumodul (2) Klebstoff (4) als Klebebad in die Nut (10) eingebracht wird und die Zunge (9) in das Klebebad eingebracht wird.

6. Verfahren nach zumindest einem der vorhergehenden Ansprüche, **dadurch gekennzeichnet, dass** die Zunge (9) Löcher aufweist, so dass Klebstoff (4) durch die Löcher hindurchtreten kann.

7. Verfahren nach zumindest einem der vorhergehenden Ansprüche, **dadurch gekennzeichnet, dass** die toleranzausgleichende Schraubverbindung (5) im Kraftfahrzeug verbleibt.

8. Verfahren nach zumindest einem der vorhergehenden Ansprüche, **dadurch gekennzeichnet, dass** der Unterbau (1) und das Aufbaumodul (2) zusätzlich vernietet werden und/oder auf andere Art zusätzlich aneinander befestigt werden.

9. Kraftfahrzeug umfassend einen Unterbau (1) und zumindest ein Aufbaumodul (2) des Kraftfahrzeuges, wobei der Unterbau (1) und das Aufbaumodul (2) bereits vor einem Verbinden lackiert sind, und jeweils zumindest einen Randbereich (3) aufweisen, wobei zumindest der Randbereich (3) des Unterbaus (1) und/oder des Aufbaumoduls (2) mittels Klebstoff (4) verbunden sind, wobei der Unterbau (1) und das Aufbaumodul (2) mittels einer toleranzausgleichenden Schraubverbindung (5) relativ zueinander positioniert sind, so dass die Randbereiche (3) von Unterbau (1) und während der Aushärtung des Klebstoffs (4) mittels der toleranzausgleichenden Schraubverbindung (5) in ihrer relativen Lage fixiert sind.

## Claims

1. Method for producing a motor vehicle comprising the steps:
- producing a substructure (1) and at least one superstructure module (2) of the motor vehicle, wherein the substructure (1) and the superstructure module (2) in each case have at least one edge region (3),
- painting at least the edge region (3) of the substructure (1) and/or the superstructure module (2),
- connecting the edge regions (3) of the substructure (1) and the superstructure module (2) by means of adhesive (4), wherein the substructure (1) and the superstructure module are positioned relative to one another by means of a tolerance-compensating screw connection (5), so that the edge regions (3) of the substructure (1) and the superstructure module (2) are fixed in the relative position thereof during the curing of the adhesive (4) by means of the tolerance-compensating screw connection (5).

2. Method according to Claim 1, **characterized in that** the tolerance-compensating screw connection (5) bridges a spacing between the substructure (1) and the superstructure module (2).

3. Method according to Claim 1, **characterized in that** the tolerance-compensating screw connection (5) is an automatic tolerance-compensating system, in particular a FLEXITOL® element.

4. Method according to Claim 1, **characterized in that** the tolerance-compensating screw connection (5) comprises a sleeve (6) with a first internal thread which is inserted into the substructure (1) or the superstructure module (2), comprises an adjusting element (7) with an internal thread and an external thread which is screwed into the internal thread of the sleeve, and comprises a screw (8) with an external thread which is screwed through the superstructure module (2) or the substructure (1) into the internal thread of the adjusting element (7) and the sleeve (6).

5. Method according to at least one of the preceding claims, **characterized in that** the substructure (1) or the superstructure module (2) has a tongue (9) in the edge region (3) and the superstructure module (2) or the substructure (1) has a groove (10) in the edge region (3) and for connecting the edge regions (3) of the substructure (1) and the superstructure module (2) adhesive (4) is introduced into the groove (10) as an adhesive bath and the tongue (9) is introduced into the adhesive bath.

6. Method according to at least one of the preceding claims, **characterized in that** the tongue (9) comprises holes so that adhesive (4) is able to pass through the holes.

7. Method according to at least one of the preceding claims, **characterized in that** the tolerance-compensating screw connection (5) remains in the motor vehicle.

8. Method according to at least one of the preceding claims, **characterized in that** the substructure (1) and the superstructure module (2) are additionally riveted and/or additionally fastened to one another in a different manner.

9. Motor vehicle comprising a substructure (1) and at least one superstructure module (2) of the motor vehicle, wherein the substructure (1) and the superstructure module (2) in each case have at least one edge region (3), wherein at least the edge region (3) of the substructure (1) and/or the superstructure module (2) are connected together by means of adhesive (4), wherein the substructure (1) and the superstructure module (2) are positioned relative to one another by means of a tolerance-compensating screw connection (5), so that the edge regions (3) of the substructure (1) and the superstructure module (2) are fixed in the relative position thereof by means of the tolerance-compensating screw connection (5).

## Revendications

1. Procédé de fabrication d'un véhicule automobile comprenant les étapes suivantes:
- produire un châssis (1) et au moins un module de carrosserie (2) du véhicule automobile, dans lequel le châssis (1) et le module de carrosserie (2) présentent respectivement au moins une région de bord (3),
- peindre au moins la région de bord (3) du châssis (1) et/ou du module de carrosserie (2),
- assembler les régions de bord (3) du châssis (1) et du module de carrosserie (2) au moyen d'une colle (4), dans lequel le châssis (1) et le module de carrosserie sont positionnés l'un par rapport à l'autre au moyen d'un assemblage vissé (5) permettant de compenser les tolérances, de telle manière que les régions de bord (3) du châssis (1) et du module de carrosserie (2) soient fixées dans leur position relative au moyen de l'assemblage vissé permettant de compenser les tolérances (5) pendant le durcissement de la colle (4).

2. Procédé selon la revendication 1, **caractérisé en ce que** l'assemblage vissé permettant de compenser les tolérances (5) occupe une distance entre le châssis (1) et le module de carrosserie (2).

3. Procédé selon la revendication 1, **caractérisé en ce que** l'assemblage vissé permettant de compenser les tolérances (5) est un système automatique de compensation des tolérances, en particulier un élément FLEXITOL ®.

4. Procédé selon la revendication 1, **caractérisé en ce que** l'assemblage vissé permettant de compenser les tolérances (5) comprend une douille (6) avec un premier filet intérieur, qui est insérée dans le châssis (1) ou dans le module de carrosserie (2), comprend un élément de réglage (7) avec un filet intérieur et un filet extérieur, qui est vissé dans le filet intérieur de la douille, et comprend une vis (8) avec un filet extérieur, qui est vissée à travers le module de carrosserie (2) ou le châssis (1) dans le filet intérieur de l'élément de réglage (7) et de la douille (6).

5. Procédé selon au moins une des revendications précédentes, **caractérisé en ce que** le châssis (1) ou le module de carrosserie (2) présente une languette (9) dans la région de bord (3) et le module de carrosserie (2) ou le châssis (1) présente une rainure (10) dans la région de bord (3), et pour l'assemblage des régions de bord (3) du châssis (1) et du module de carrosserie (2) on introduit de la colle (4) sous la forme d'un bain de colle dans la rainure (10) et on introduit la languette (9) dans le bain de colle.

6. Procédé selon au moins une des revendications précédentes, **caractérisé en ce que** la languette (9) présente des trous, de telle manière que la colle (4) puisse se répandre à travers les trous.

7. Procédé selon au moins une des revendications précédentes, **caractérisé en ce que** l'assemblage vissé permettant de compenser les tolérances (5) reste dans le véhicule automobile.

8. Procédé selon au moins une des revendications précédentes, **caractérisé en ce que** le châssis (1) et le module de carrosserie (2) sont en plus rivés et/ou fixés en plus l'un à l'autre d'une autre manière.

9. Véhicule automobile comprenant un châssis (1) et au moins un module de carrosserie (2) du véhicule automobile, dans lequel le châssis (1) et le module de carrosserie (2) sont déjà peints avant un assemblage, et présentent respectivement au moins une région de bord (3), dans lequel au moins la région de bord (3) du châssis (1) et/ou celle du module de carrosserie (2) sont assemblées au moyen de colle (4), dans lequel le châssis (1) et le module de carrosserie (2) sont positionnés l'un par rapport à l'autre au moyen d'un assemblage vissé permettant de compenser les tolérances (5), de telle manière que les régions de bord (3) du châssis (1) et du module de carrosserie (2) soient fixées dans leur position relative au moyen de l'assemblage vissé permettant de compenser les tolérances (5) pendant le durcissement de la colle (4).
